# EUROPÄISCHE PATENTSCHRIFT

(11) **EP 0 575 594 B1**
(45) Veröffentlichungstag und Bekanntmachung des Hinweises auf die Patenterteilung: **03.04.1996**
(21) Anmeldenummer: 93902215.8
(22) Anmeldetag: 15.01.1993
(51) Int. Cl.: B65D 1/22

(54) **BEHÄLTER AUS KUNSTSTOFF, INSBESONDERE GEMÜSEBEHÄLTER, MIT KLAPPBAREN SEITENWÄNDEN**
PLASTIC CONTAINER, ESPECIALLY A VEGETABLE CONTAINER, WITH HINGED SIDES
CAISSE EN MATIERE PLASTIQUE, EN PARTICULIER CAISSE A LEGUMES, AVEC DES PAROIS LATERALES REPLIABLES

(30) Priorität: 17.01.1992 DE 4201145
(43) Veröffentlichungstag der Anmeldung: 29.12.1993
(73) Patentinhaber: Schoeller-Plast S.A., CH-1680 Romont (CH)
(72) Erfinder: UMIKER, Hans, CH-8132 Egg (CH)
(74) Vertreter: Bockhorni, Josef, Dipl.-Ing.
(86) Internationale Anmeldenummer: EP9300091
(87) Internationale Veröffentlichungsnummer: WO9313991

(56) Entgegenhaltungen:
- WO-A-86/01182
- CH-A- 456 438
- NL-A- 7 110 021

## Beschreibung

Die Erfindung betrifft einen Behälter gemäß dem Oberbegriff des Patentanspruches 1.

Als Gemüsebehälter für den Transport von Gemüse und dergleichen vom erzeugenden Betrieb bis zum Großhändler und von dort zum verkaufenden Betrieb, werden zumeist noch Behälter aus Holz oder Karton verwendet, die jedoch mangels geeigneter Reinigungsmöglichkeit und auch mangels entsprechender Festigkeit im Falle von Karton für eine mehrfache Wiederverwendung kaum geeignet sind. Auch lassen sich Behälter aus Holz oder Karton nur schlecht oder allenfalls ungenügend reinigen. Ein weiterer Nachteil der herkömmlichen Verpackungen besteht darin, daß sie für den Rücktransport über Gebühr viel Platzbedarf fordern.

Aus dem Dokument CH-A-456 438 ist ein zusammenklappbarer, offener Transportbehälter bekannt, bei dem Boden und Wände aus einem zusammenhängenden Stück Kunststoff gemacht sind, wobei die zum Umklappen der Wände erforderlichen Scharniere durch schmale weichere Streifen des Kunststoffstückes realisiert sind. Die in diesem Dokument offenbarte Struktur birgt den Nachteil, daß zu Ihrer Produktion eine ausgesprochen komplizierte Spritzgußform notwendig ist und daß aufgrund der geforderten Klappbarkeit der Seitenwände nach innen und des einfachen als Scharnier wirkenden Kunststoffstreifens zwischen Seitenwand und Boden eine nur unzureichende Stabilität des gesamten Behälters erreicht werden kann.

Aufgabe der Erfindung ist es, die Nachteile des bekannten Stands der Technik zu beheben und für Mehrfachverwendungen geeignete Behälter zu schaffen, die einfach herstellbar und gut handhabbar sind sowie für den Rücktransport nur wenig Platzbedarf erfordern.

Diese Aufgabe wird erfindungsgemäß durch die Merkmale des Anspruchs 1 gelöst, wobei zweckmäßige Weiterbildungen der Erfindung durch die in den Unteransgrüchen enthaltenen Maßnahmen gekennzeichnet sind.

Nach Maßgabe der Erfindung werden Behälter aus Kunststoff insbesondere für die Verwendung als Gemüsebehälter, vorgeschlagen, die mit vier nach innen über den Boden klappbaren Seitenwänden ausgerüstet sind, so daß die Behälter nach Gebrauch in eine Klappstellung überführt werden können, in der die Behälter nurmehr einen sehr geringen Platzbedarf fordern, also gut gelagert und rückgeführt werden können. Dadurch, daß die Behälter aus Kunststoff hergestellt sind, sind sie robust und lassen sich gut reinigen im Vergleich zu konventionellen Gemüsebehältern aus Karton oder Holz.

In besonders vorteilhafter Weise ist dieser Behälter einstükkig ausgebildet und sind die Klagggelenke der Seitenwände durch Filmscharniere gebildet, die gegenüber anderen Scharnieren weit weniger stark verschmutzt werden können und im übrigen auch leichter zu reinigen sind. Ferner sind Filmscharniere produktionstechnisch einfacher herzustellen und beeinflussen in keiner Weise die konstruktive und formgemäße Ausbildung der Seitenwände und Böden solcher Behälter. Die einstückige Herstellung bietet ferner den Vorteil, daß Montagearbeiten zur Herstellung des Behälters in Gänze entfallen. Auch die Handhabung der Behälter oder Kastens beim Auf- und Zusammenklappen ist denkbar einfach.

Insbesondere aus Platzgründen für den Rücktransport der leeren Behälter ist es zweckmäßig, die Seitenwände nach innen zu klappen, wobei sie insbesondere dann innerhalb des Behälterbodens zu liegen kommen sollen, also nicht über die Abmessungen des Behälterbodens außen vorstehen. Um aber Filmscharniere verwirklichen zu können und ferner zu gewährleisten, daß in aufgeklappter Stellung der Seitenwände diese von unten her abgestützt sind, ist es vorteilhaft Zwischenglieder zwischen Seitenwand und Behälterboden vorzusehen, die mit den Seitenwänden und dem Behälterboden zweckmäßigerweise jeweils über Filmscharniere verbunden sind. Die Zwischenglieder werden nach Entformung des Behälters aus der Form nach innen zum Behälterboden hin geklappt und mit dem Behälterboden verrastet, so daß sie quasi dauerhafter Bestandteil des Bodens sind. Die Zwischenglieder bilden dann zweckmäßigerweise zugleich die Aufstandsflächen und lastabtragenden Flächen für die Seitenwände in deren aufgeklappter Stellung, mit denen sie über Filmscharniere verbunden sind.

Zweckmäßigerweise sind zumindest die Zwischenglieder eines Paares von gegenüberliegenden Seitenwänden höher ausgebildet als die Zwischenglieder des anderen Paares der Seitenwände, so daß die an den höheren Zwischengliedern angelenkten Seitenwände über die anderen Seitenwände geklappt werden können. Im Falle der Überlappung gegenüberliegender Seitenwände müssen die Zwischenglieder entsprechend gestuft und die Seitenwanddicke unterschiedlich ausgebildet sein.

Zweckmäßigerweise sind die Seitenwände in aufgeklappter Stellung miteinander verriegelbar, wobei diese Verriegelung jedoch anders als bei den Zwischengliedern lösbar sein muß. Als Verriegelung eignet sich hierbei insbesondere der Eingriff von Rastnasen einer Seitenwand in komplementäre Ausnehmungen der anderen Seitenwand.

Nachfolgend werden bevorzugte Ausführungsbeispiele des Klappbehälters anhand der Zeichnung beschrieben. Darin zeigen:
- Fig. 1: eine perspektivische Ansicht des Behälters in aufgeklappter Stellung der Seitenwände,
- Fig. 2: eine Ansicht in Übergangsstellung zur Aufklappstellung,
- Fig. 3: eine Ansicht in Übergangsstellung zur Aufklappstellung
- Fig. 4: eine perspektivische Ansicht des Behälters nach den Figuren 1 bis 3 in Klappstellung,
- Fig. 5: eine Teilschnittdarstellung, die den Behälterboden, ein Zwischenglied und einen Teil einer Seitenwand des Behälters zeigt,
- Fig. 6: eine Teilansicht der Darstellung in Figur 5 zur Darstellung des Formvorgangs,
- Fig. 7: eine Ansicht analog Figur 5, jedoch in einer weiteren Ausführungsform,
- Fig. 8: eine Teilansicht analog den Figuren 5 und 7, jedoch in einer weiteren Ausführungsform,
- Fig. 9: eine Teilansicht zur Darstellung der Verriegelung beider hochgeklappten Seitenwände,
- Fig. 10: eine schematische Ansicht des Behälters zur Erläuterung des Klappmechanismus,
- Fig. 11: eine Ansicht des Behälters mit teilweise nach innengeklappten Seitenwänden sowie
- Fig. 12: eine schematische Darstellung eines zusammengeklappten Behälters in Seitenansicht (Schnittdarstellung).

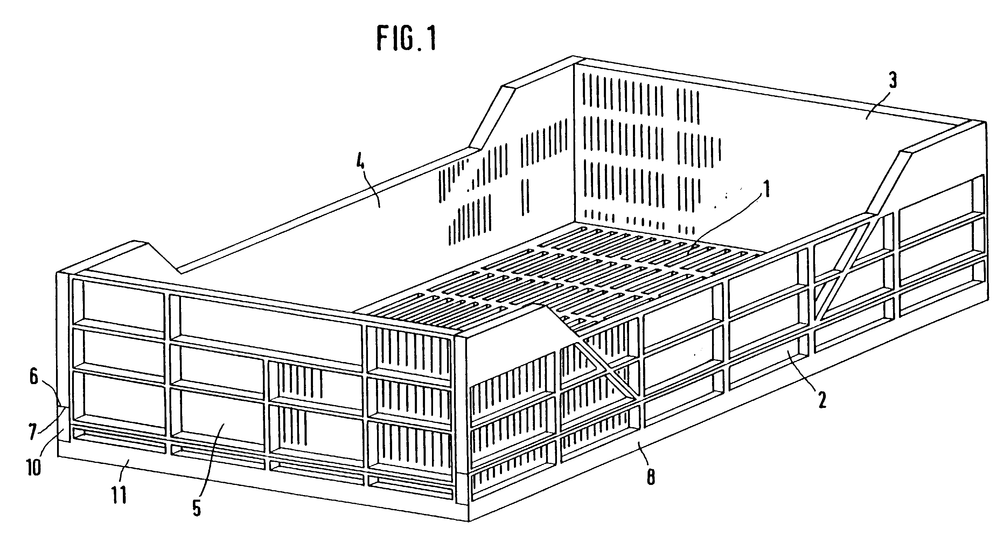

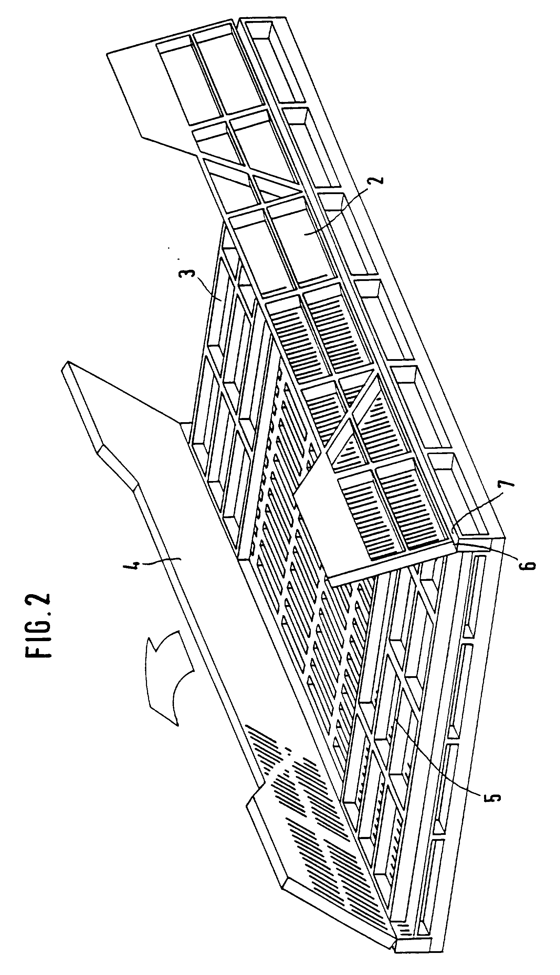

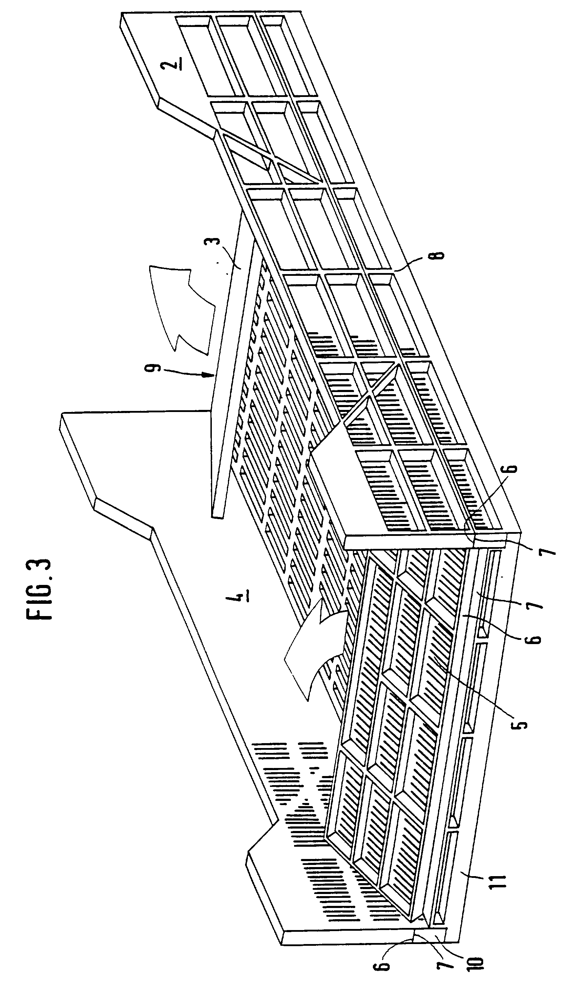

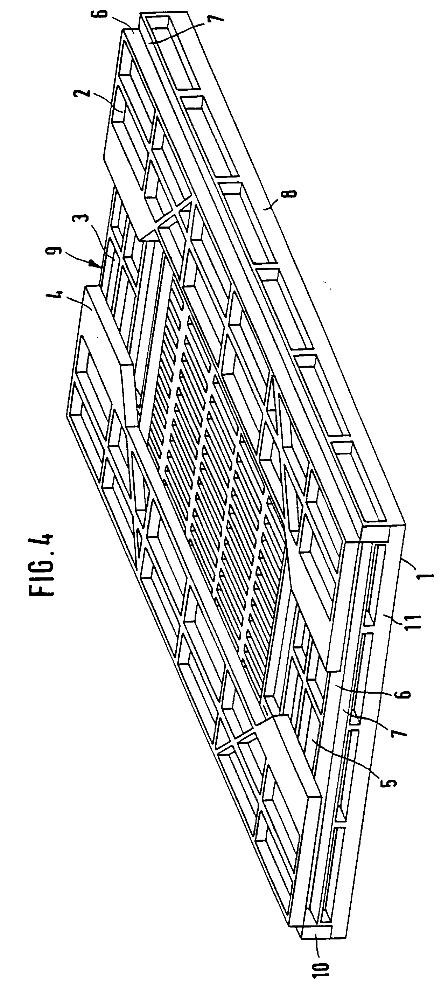

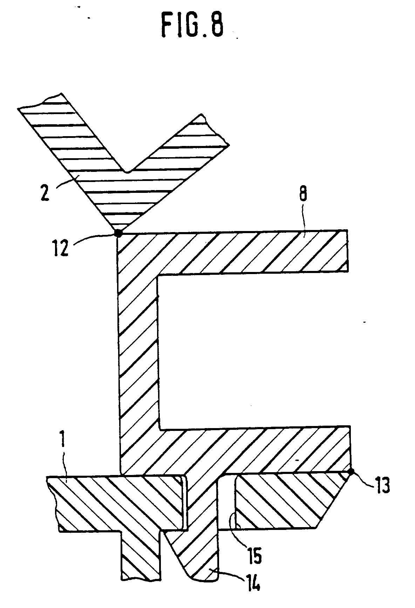

Der Behälter nach den Figuren 1 bis 4 umfaßt einen mit 1 bezeichneten rechteckigen Behälterboden und vier Seitenwände 2 bis 5, wobei im dargestellten Ausgangsbeispiel dessen Grundabmessungen 300 x 400 mm betragen und die mit 2 und 4 bezeichneten Seitenwände Längsseitenwände und die mit 3 und 5 bezeichneten Schmalseitenwände bilden. Die Seitenwände 2 bis 5 sind nach innen auf den Behälterboden 1 klappbar, wobei die endgültige Klappstellung sich aus Figur 4 ergibt. Figur 2 zeigt, daß zum Aufklappen des Behälters nach Figur 4 zuerst die beiden Längsseitenwände 2 und 4 und danach die beiden in Klappstellung darunterliegenden Schmalseitenwände 3 und 5 nach oben in eine bezüglich des Behälterbodens 1 senkrechte Stellung geklappt werden. In dieser senkrechten Klappstellung der vier Seitenwände des Behälters sind die Seitenwände miteinander verriegelt, wobei sich ein entsprechender verriegelungsmechanismus beispielshalber aus Figur 8 ergibt. Ferner liegen die Seitenwände 2 bis 5 in ihrer aufgeklappten Stellung (Figur 1) mit ihren unteren Randseiten 6 auf dem Behälterboden bzw. noch näher beschriebenen Zwischengliedern auf, die Aufstandsflächen 7 bilden, die auch für die Lastübertragung von aufeinandergestapelten Behältern dienen.

Der kastenartige Behälter aus vier Seitenwänden und einem Behälterboden ist in einem Arbeitsvorgang als einstückiges Teil hergestellt, so daß eine Montage einzelner Bauteile zur Bildung des Behälters entfällt. Der Behälter kann vielmehr so wie er aus der Form kommt, zusammmengeklappt und in Aufklappstellung überführt werden.

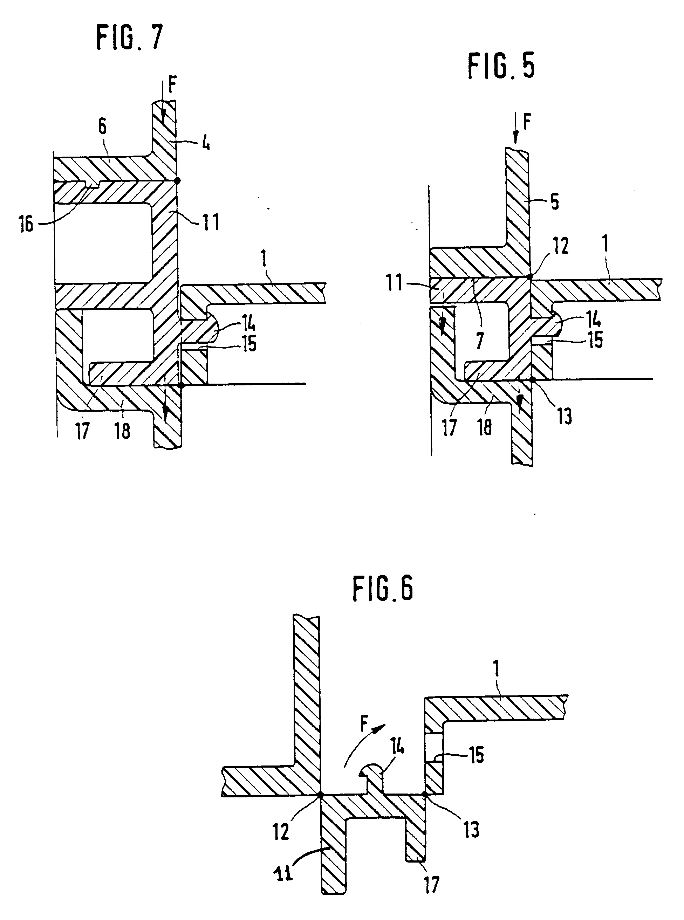

Die vier Seitenwände sind hierbei nicht unmittelbar am Behälterboden angelenkt, sondern über einstückige Zwischenglieder 8 bis 11, von denen jeweils eines in den Figuren 5, 7 und 8 dargestellt ist.

Figur 5 zeigt mit 1 den Behälterboden und mit 5 eine Seitenwand in aufgeklappter Stellung, wobei das Zwischenglied zwischen Seitenwand und Behälterboden mit 11 bezeichnet ist. Die Seitenwand 5 ist hierbei über ein langestrecktes Filmscharnier 12 mit dem Zwischenglied 11 und dieses über ein langgestrecktes Filmscharnier 13 mit dem Behälterboden 1 gelenkig verbunden.

Figur 6 zeigt die entsprechenden Teile in Formstellung, wie sie in der Spritzgußform hergestellt werden. Ersichtlich können auf Grund des Zwischengliedes 11 die Filmscharniere 12 und 13 entsprechend hergestellt werden, so daß ein Klappen der Seitenwände nach innen in den Behälter ermöglicht ist. Ferner ist auf Grund des Zwischenglieds sichergestellt, daß die nach innen klappbaren Seitenwände auf eine mit 7 bezeichneten Aufstandfläche des Zwischengliedes aufliegen. Nach Entformung des Behälters aus der Form werden die Zwischenglieder 8 bis 11 entsprechend der Pfeilrichtung F in Figur 6 auf bzw. über den Behälterboden geklappt, so daß eine oder mehrere am Zwischenglied ausgebildete hakenförmige Rastnasen 14 in entsprechende Ausnehmungen 15 am seitlichen Rand des Behälterbodens 1 eingedrückt werden und die Nasen 14 dann hinter die Ausnehmungen schnappen, wie sich aus Figur 5 ergibt. Diese Rast- bzw. Verriegelungsstellung ist zweckmäßigerweise unlösbar, so daß das Zwischenglied 11 dann im Prinzip Bestandteil des Bodens 1 ist. Wie sich aus Figur 5 ergibt, läßt sich dann die auf dem Zwischenglied in lastabtragender Weise aufsitzende Seitenwand 5 aus der dargestellten aufgeklappten Stellung nach innen auf den Behälterboden 1 klappen. Die Filmscharniere erstrecken sich zweckmäßigerweise über die gesamte Länge der Seitenwände und der Zwischenglieder.

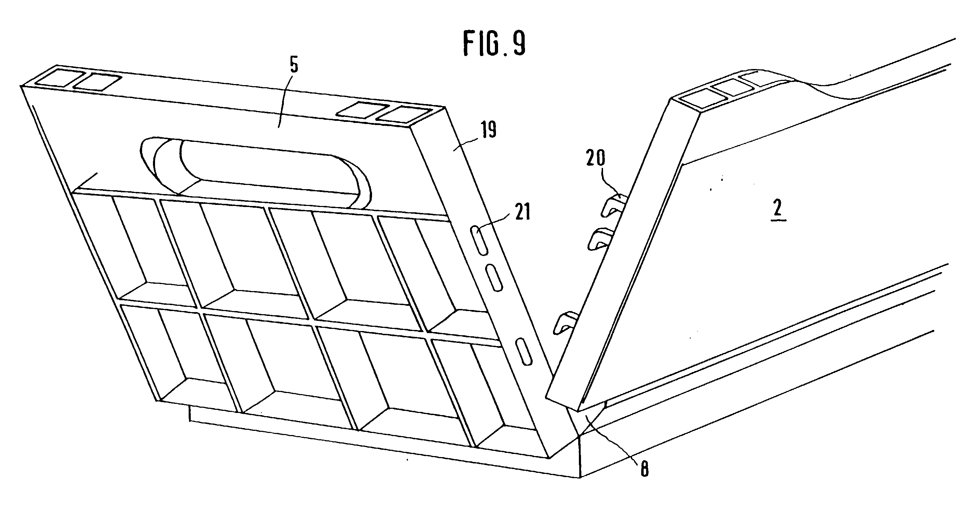

Figur 7 zeigt ein Zwischenglied einer anderen Seitenwand, wobei dieses Zwischenglied höher ausgebildet ist, als das Zwischenglied 11, so daß die nach innen klappbare Seitenwand, etwa die Seitenwand 4, höher liegt und damit über die nach innen geklappte Seitenwand geklappt werden kann. Bezieht man die Ausführungsform nach Figur 7 auf den Behälter nach den Figuren 1 bis 4, dann handelt es sich bei dem Zwischenglied um das mit 11 bezeichnete Zwischenglied. Dieses Zwischenglied klappt mit einer Rastnase 14 in eine entsprechende Ausnehmung 15 des Bodens 1 ein. In einer weiteren, jedoch nicht notwendigen Variante ist an der unteren Randseite 6 der Seitenwand 4 ein Rast- und Zentrierelement 16 vorgesehen, welches in eine entsprechende Nut oder Ausnehmung des Zwischengliedes in aufgeklappter Stellung greift und somit die aufgeklappte Stellung in Verbund mit der Verriegelung nach Figur 9 noch weiter stabilisiert.

Aus den Figuren 5 und 7 ergibt sich ferner auch die Stapelstellung der Behälter, wozu zweckmäßigerweise die Zwischenglieder als Stapelränder ausgebildet sind, indem der untere Schenkel 17 der als U- (Figur 5) oder E-Profil (Figur 7) ausgebildeten Zwischenglieder etwas kürzer als die darüberliegenden Schenkel ausgebildet ist, so daß der Behälter mit seinem unteren Ende entsprechend von oben in einen untenliegenden Behälter einsetzbar ist und dort auf einer entsprechenden Schulter 18 der Seitenwand des unteren Behälters aufliegt, die somit zur Lastübertragung von oben nach unten beiträgt.

Figur 8 zeigt eine Ausführungsform, bei der das Zwischenglied nicht seitlich mit dem Behälterboden 1 verrastbar ist, sondern von oben auf den Behälterboden geklappt wird und von oben mit den entsprechenden Rastnasen 14 in Ausnehmungen 15 des Behälterbodens greift. Diese Ausführungsform hat den Vorteil, daß bei der Lastübertragung im Stapel die Kräfte über die Seitenwände und das Zwischenglied auf dem Boden eingeleitet werden. Dies führt zu einer Entlastung der Rastverbindung zwischen Zwischenglied und Boden. Zur besseren Orientierung sind in Figur 8 Bezugszeichen des Behälters aus den Figuren 1 bis 4 bzgl. der Seitenwand 2 eingesetzt worden.

Figur 9 zeigt die Verriegelung der Seitenwände miteinander, indem etwa in den einander gegenüberliegenden Seitenwänden 3 und 5 an den Randseiten 19 entsprechende Ausnehmungen und an den Rändern der Seitenwand 2 an der Innenwandfläche entsprechende Rasthaken 20 ausgebildet sind, vorzugsweise übereinander, so daß beim Hochklappen der Seitenwände die Rastnasen 20 in entsprechende Ausnehmungen 21 gedrückt werden können. Diese Verriegelung ist lösbar, wobei unter leichtem Zug der entsprechenden Seitenwände 2 und 5 gegeneinander die Rasthaken 20 aus den Ausnehmungen 21 herausbewegt werden können. In Figur 9 mit punktierter Linie auch das entsprechende Zwischenglied angedeutet.Zweckmäßigerweise sind je Seitenwand drei Haken bzw. Ausnehmungen übereinander angeordnet.

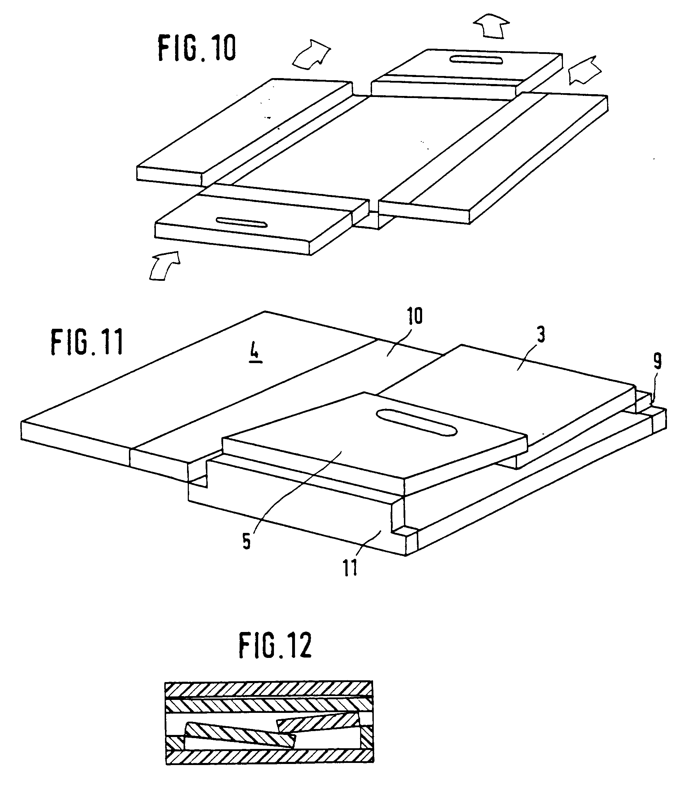

Figur 10 ist rein schematisch und soll die unterschiedlich hohen Zwischenglieder erläutern, da die Klappstellung der Seitenwände in die Horizontale nach außen beim erfindungsgemäßen Behälter nicht möglich ist.

Figur 11 zeigt gleichfalls die unterschiedliche Höhe der Zwischenglieder, hier 9, 10 und 11, so daß die Seitenwände jeweils über die anderen Seitenwände geklappt werden können. Die unterschiedliche Höhe der Zwischenglieder 9 und 10 eines Paars einander gegenüberliegender Seitenwände 5 und 3 erklärt sich daraus, weil die Seitenwände 3 und 5 in Klappstellung einander überlappen, mithin die Zwischenglieder um die Dicke der Seitenwände entsprechend höher sein müssen. Entsprechend höher ist das Zwischenglied 10, da die Seitenwand 4 über die Seitenwände 3 und 5 geklappt werden muß.

Figur 12 verdeutlicht das Übereinanderklappen der Seitenwände und das Erfordernis nach unterschiedlichen Höhen der Zwischenglieder.

Wie sich recht deutlich aus den Figuren 5, 7 und 8 ergibt, befindet sich das Filmscharnier zwischen Seitenwand und entsprechendem Zwischenglied am innenliegenden Rand der Seitenwand, so daß die entsprechende Seitenwand bzgl. des Behälters nur nach innen geklappt werden kann und in senkrechter Stellung mit seiner unteren mit 6 bezeichneten Randfläche auf der entsprechenden Aufstandsfläche 7 des Zwischengliedes aufliegt. Die Seitenwand kann somit nicht nach außen geklappt werden.

## Patentansprüche

1. Behälter aus Kunststoff, insbesondere Gemüsebehälter, mit einem Behälterboden und vier Seitenwänden, die nach innen in Richtung auf den Behälterboden klappbar sind, wobei der Behälter einstückig ausgebildet ist, **dadurch gekennzeichnet,** daß jede Seitenwand (2 bis 5) über ein Zwischenglied (8 bis 11) mit dem Behälterboden (1) verbunden ist, welches einerseits mit der Seitenwand über ein am unteren Längsrand dieser Seitenwand ausgebildete Filmscharnier (12) und andererseits mit dem Behälterboden (1) über ein Filmscharnier (13) verbunden ist und welches eine Aufstands- und/oder Lastabtragungsfläche für die aufgeklappte Seitenwand bildet.

2. Behälter nach Anspruch 1, **dadurch gekennzeichnet,** daß jedes Zwischenglied (8 bis 11) mit dem Behälterboden (1) verrastbar ist und zwar vorzugsweise mit dem Seitenrand oder mit der oberen Bodenfläche des Behälterbodens.

3. Behälter nach Anspruch 2, **dadurch gekennzeichnet,** daß die Verrastung (14, 15) des Zwischengliedes mit dem Boden (1) unlösbar ist.

4. Behälter nach einem der vorhergehenden Ansprüche, **dadurch gekennzeichnet,** daß die Zwischenglieder (8, 10) der Längsseitenwände (2, 4) unterschiedliche Höhe als die Zwischenglieder (9, 11) der schmalen Seitenwände (3, 5) haben und daß die Zwischenglieder (8 bis 11) gegenüberliegender Seitenwände (2 bis 5), die in Klappstellung einander überlappen, unterschiedliche Höhe haben, wobei der Höhenunterschied einem ganzzahligen Vielfachen der Seitenwanddicke entspricht, so daß ein flächiges Übereinanderklappen der Seitenwände möglich ist (vergleiche Figur 12).

5. Behälter nach einem der vorhergehenden Ansprüche, **dadurch gekennzeichnet,** daß die Seitenwände (2 bis 5) in aufgeklappter Stellung lösbar miteinander durch Einschnapp- oder Rastverbindungen (20, 21) verriegelbar sind.

6. Behälter nach Anspruch 5, **dadurch gekennzeichnet,** daß zur Verriegelung an einem Paar von gegenüberliegenden Seitenwänden (2, 4) Rasthaken (20) vorzugsweise an der entsprechenden Seitenwandinnenfläche und an dem anderen Paar von gegenüberliegenden Seitenwänden (3, 5) komplementäre Rastausnehmungen (21) vorzugsweise an der auf die Innenflächen der anderen Seitenwände zuweisenden Randseiten (19) ausgebildet sind.

7. Behälter nach einem der vorhergehenden Ansprüche, **dadurch gekennzeichnet,** daß die Zwischenglieder (8 bis 11) hohl oder je nach Höhe als U- oder E-Profil ausgebildet sind.

8. Behälter nach einem der vorhergehenden Ansprüche, **dadurch gekennzeichnet,** daß die Zwischenglieder (8 bis 11) als Stapelränder ausgebildet sind.

## Claims

1. Container of plastics material, particularly a vegetable container, with a container base and four walls which are foldable inwardly in the direction towards the container base, the container being of one-piece construction, characterised in that each side wall (2 to 5) is connected to the container base by means of an intermediate member (8 to 11) which is connected on the one hand to the side wall by means of a film hinge (12) formed on the lower longitudinal edge of this side wall and on the other hand to the container base (1) by means of a film hinge (13) and which affords a support and/or load-reducing surface for the side wall, when folded up.

2. Container as claimed in Claim 1, characterised in that each intermediate member (8 to 11) is lockable to the container base (1), preferably to the side edge or to the upper base surface of the container base.

3. Container as claimed in Claim 2, characterised in that the locking (14, 15) of the intermediate member to the base (1) is unreleasable.

4. Container as claimed in one of the preceding claims, characterised in that the intermediate members (8, 10) of the longitudinal side walls (2, 4) have a different height to the intermediate members (9, 11) of the narrow side walls (3, 5) and that the intermediate members (8 to 11) of opposing side walls (2 to 5), which overlap with one another in the folded position, have a different height, the height difference corresponding to a whole number multiple of the thickness of the side wall so that it is possible to fold the side walls flat above one another (see Figure 12).

5. Container as claimed in one of the preceding claims, characterised in that the side walls (2 to 5) are releasably lockable together in the folded up position by snap or locking connections (20, 21).

6. Container as claimed in Claim 5, characterised in that formed for locking purposes on one pair of opposing side walls (2, 4) are locking hooks (20), preferably on the corresponding side wall inner surface, and on the other pair of opposing side walls (3, 5) are complementary locking recesses (21), preferably on the side edges (19) directed towards the inner surfaces of the other side walls.

7. Container as claimed in one of the preceding claims, characterised in that the intermediate members (8 to 11) are hollow or, depending on their height, constructed as U or E profiles.

8. Container as claimed in one of the preceding claims, characterised in that the intermediate members (8 to 11) are constructed as stacking edges.

## Revendications

1. Récipient en matière plastique, en particulier récipient à légumes, avec un fond de récipient et quatre parois latérales qui sont repliables vers l'intérieur en direction du fond du récipient, le récipient étant réalisé dlune seule pièce, caractérisé en ce que chaque paroi latérale (2 à 5) est raccordée par un élément intermédiaire (8 à 11) au fond du récipient (1), élément intermédiaire qui d'une part, est raccordé à la paroi latérale par l'intermédiaire d'une articulation pelliculaire (12) formée sur le bord longitudinal inférieur de cette paroi latérale et d'autre part, au fond du récipient (1) par l'intermédiaire d'une articulation pelliculaire (13) et qui forme une surface d'appui de charge et/ou de position verticale pour la paroi latérale repliée.

2. Récipient selon la revendication 1, caractérisé en ce que chaque élément intermédiaire (8 à 11) peut s'enclencher avec le fond de récipient (1) et ce de préférence avec le bord latéral ou avec la surface de fond supérieure du fond du récipient.

3. Récipient selon la revendication 2, caractérisé en ce que l'enclenchement (14, 15) de l'élément intermédiaire est indétachable du fond (1).

4. Récipient selon l'une des revendications précédentes, caractérisé en ce que les éléments intermédiaires (8, 10) des parois latérales longitudinales (2, 4) sont de hauteur différente par rapport aux éléments intermédiaires (9, 11) des petites parois latérales (3, 5) et en ce que les éléments intermédiaires (8 à 11) des parois latérales opposées (2 à 5) qui se recouvrent entre elles à l'état replié, ont une hauteur différente, la différence de hauteur correspondant à un multiple de nombre entier de l'épaisseur de paroi latérale permettant un repliage en surface des parois latérales (voir figure 12).

5. Récipient selon l'une des revendications précédentes, caractérisé en ce que les parois latérales (2 à 5) sont verrouillables en position repliée de façon détachable entre elles par des liaisons encliquetables ou enclenchables (20, 21).

6. Récipient selon la revendication 5, caractérisé en ce que pour le verrouillage sur une paire de parois latérales opposées (2, 4) sont formés des crochets d'encliquetage (20) de préférence sur la surface interne de parois latérales correspondantes et sur l'autre paire de parois latérales opposées (3, 5) des évidements d'encliquetage complémentaires (21) de préférence sur le côté marginal (19) dirigé sur les surfaces internes des autres parois latérales.

7. Récipient selon l'une des revendications précédentes, caractérisé en ce que les éléments intermédiaires (8 à 11) sont creux ou selon la hauteur réalisés comme profilés en U ou en E.

8. Récipient selon l'une des revendications précédentes, caractérisé en ce que les éléments intermédiaires (8 à 11) sont conçus comme bords d'empilage.
